# EUROPEAN PATENT APPLICATION

(11) **EP 2 757 780 A1**
(43) Date of publication of application: **23.07.2014**
(21) Application number: 12832544.6
(22) Date of filing: 08.03.2012
(51) Int. Cl.: H04N 7/173, G06F 12/00, G06F 13/00, G06F 13/10, H04L 13/08

(54) **DATA TRANSFERRING APPARATUS, DATA TRANSMITTING SYSTEM, DATA TRANSMITTING METHOD, AND PROGRAM**

(30) Priority: 13.09.2011 JP 2011199814
(71) Applicant: Kabushiki Kaisha Toshiba, Minato-ku Tokyo 105-8001 (JP)
(72) Inventor: TANAKA, Shingo, Tokyo 105-8001 (JP); YAMAGUCHI, Kensaku, Tokyo 105-8001 (JP); HASHI, Yasumichi, Tokyo 105-8001 (JP); KURIHARA, Shinichi, Tokyo 105-8001 (JP)
(74) Representative: HOFFMANN EITLE
(86) International application number: PCT/JP2012/056016
(87) International publication number: WO 2013/038730

(57) **Abstract**

Provided is a data transferring apparatus that reduces a processing load of a host CPU and performs efficient data transfer. The data transferring apparatus includes a command issuing unit, a transmission data extracting unit, and a communication processing unit. The command issuing unit issues a read command for reading a block for which a read instruction is given from a control device to a memory device. The transmission data extracting unit extracts transmission data from data read from the memory device according to the read command. The communication processing unit transmits the extracted transmission data to a network based on a predetermined protocol.

## Description

### Field

Embodiments of the present invention relate to a data transferring apparatus, a data transmitting system, a data transmitting method, and a program.

### Background

In recent years, video streaming delivery has been spread widely. For example, a content delivery server called a video on demand (VOD) server performs streaming delivery. Such a content delivery server performs a process of reading video content from a storage equipped therein and transmitting the video content to the user's terminal connected thereto via a network. As a communication protocol, a TCP/IP-based Hyper Text Transport Protocol (HTTP), an UDP/IP-based Realtime Transport Protocol (RTP) for real time communication, or the like may be used. In the RTP, a forward error correction (FEC) or the like is used for error correction.

An increase in the speed of a storage used in the VOD server, a network device, or the like is remarkable. In the case of the Ethernet (a registered trademark), 1 Gbps Ethernet currently became mainstream, and 10 Gbps Ethernet starts to be used in data centers or the like. Further, specifications of next generation Ethernets such as 40 Gbps/100 Gbps Ethernets have been already developed and are expected to be spread steadily in the near future. Further, with regard to a storage, a recent improvement in transfer performance of a solid state drive (SSD) as well as an increase in the speed of redundant arrays of inexpensive disks (RAID) of a hard disk drive (HDD) by a striping process (parallelization) is remarkable. With regard to serial advanced technology attachment (SATA) which is an interface (I/F) standard, SATA 3.0 of a 6 Gbps bandwidth has been already spread, and products showing an effective read rate of more than 4 Gbps in a single product have been introduced.

With the improvement in I/O performance of networks or storages, a processing load of a host central processing unit (CPU) that performs control thereof has increased. In the past, an attempt to solve this problem has been made using a technique called a TCP/IP off-load engine (hereinafter, referred to as a "TOE"). The TOE includes a dedicated processor or a dedicated circuit that performs the TCP/IP processing on behalf of the host CPU, and offloads a TCP/IP processing load from the host CPU. As the TOE is used, the TCP/IP processing can be performed at the speed higher than a communication protocol processing performed by software in the past, and it can make a contribution to an improvement in a network storage.

Each of the storage and the TOE is assumed to be controlled as a slave by the host CPU and receive or output data through a main memory. Thus, when data on a storage is received from or output to a network, data transfer between the storage (an SSD, an HDD, or the like) and the TOE is typically performed through the main memory.

Further, there are cases in which a copy of transfer data occurs on the main memory several times, for example, due to a data delivery between a kernel space and a user space of an operating system (OS) or application software that operates on the host CPU and bridges therebetween. Further, a storage also needs a file system processing. In implementations of a general file system, data read from a storage in units of sectors having a fixed byte length is first held on memory, and then data of a file having an arbitrary byte length is copied and transferred from the memory to an application buffer. For this reason, a copy of data occurs even in the file system processing.

In addition, in the content delivery server, it is necessary to perform transmission corresponding to a trick play (a reproduction form different from normal reproduction such as fast forward reproduction or rewind reproduction) of video content, and thus a condition is more complicated than normal file transfer.

As described above, when data transfer is performed between the storage and the TOE, the software processing of the host CPU intervenes, and thus it is necessary to perform reading/writing from/to the main memory at least once. Further, due to the processing of an OS, an application, and a file system, a memory copy occurs on the main memory twice or more according to the circumstances, and a load of the main memory drastically increases. In the past, such an increase in the memory load has been dealt by preparing a host CPU with sufficient processing performance and a high speed main memory.

### Citation List

### Patent Literature

Patent Literature 1: JP-A 2005-316629 (KOKAI) Summary

### Technical Problem

However, considering a recent improvement in a transfer rate of a network storage that reaches 10 Gbps, an increase in the cost and power consumption has been not a little problem. Particularly, in order to improve the performance of the main memory, the host CPU needs to be upgraded. In the case of a personal computer (PC), a server, or the like, a subordinate chip set need to be also upgraded. Thus, the problem of the cost and the power consumption has become remarkable particularly.

### Solution to Problem

A data transferring apparatus of an embodiment includes a command issuing unit, a transmission data extracting unit, and a communication processing unit. The command issuing unit issues, to the memory device, a read command for reading a block for which a read instruction is given from a control device. The transmission data extracting unit extracts transmission data from data read from the memory device according to the read command. The communication processing unit transmits the extracted transmission data to a network based on a predetermined protocol.

### Brief Description of Drawings

FIG. 1 is a block diagram illustrating a data transmitting system according to a first embodiment.
FIG. 2 is a diagram illustrating an exemplary configuration of an extent map.
FIG. 3 is a flowchart illustrating a data transfer process according to the first embodiment.
FIG. 4 is a diagram illustrating an example of correspondence between a command and an address region.
FIG. 5 is a block diagram illustrating a data transmitting system according to a second embodiment.
FIG. 6 is a flowchart illustrating a data transfer process according to the second embodiment.
FIG. 7 is a diagram illustrating an exemplary configuration of an extent map.
FIG. 8 is a block diagram illustrating a communication processing unit according to the second embodiment.
FIG. 9 is a diagram illustrating a row of data of TTS0 to TTS7.
FIG. 10 is a diagram illustrating an operation outline of transmission for a trick play.
FIG. 11 is a block diagram illustrating a host CPU according to a third embodiment.
FIG. 12 is a block diagram illustrating a communication processing unit according to the third embodiment.
FIG. 13 is a flowchart illustrating a data transfer process according to the third embodiment.
FIG. 14 is a diagram illustrating an example of a relation between an I frame and a packet.
FIG. 15 is a diagram illustrating an example of grouping data packets.
FIG. 16 is a diagram illustrating an example of grouping data packets.
FIG. 17 is a block diagram of a host CPU according to a modified example of the third embodiment.

### Description of Embodiments

Hereinafter, exemplary embodiments of a data transferring apparatus, a data transmitting system, a data transmitting method, and a program according to the invention will be described in detail with reference to the accompanying drawings.

### (First embodiment)

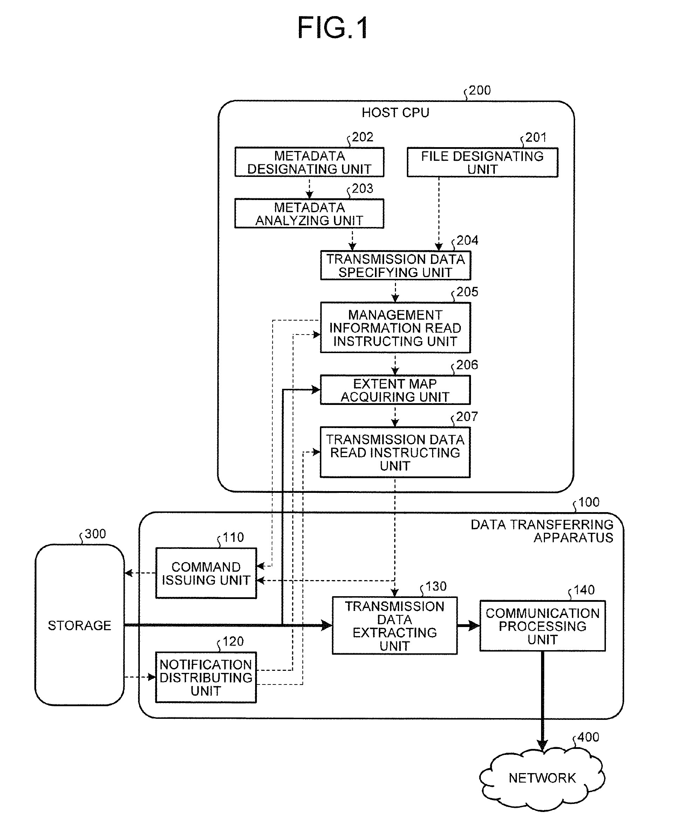

FIG. 1 is a block diagram illustrating a schematic exemplary configuration of a data transmitting system according to a first embodiment. A dashed arrow represents the flow of control, a solid arrow represents the flow of data read from a storage, and a bold solid arrow represents the flow of data (transmission data) to be transmitted among pieces of read data.

The data transmitting system according to the first embodiment includes a host CPU (processor) 200 serving as a control device, a storage 300 serving as a memory device, and a data transferring apparatus 100. Based on control of the host CPU 200, the data transferring apparatus 100 reads transmission data from the storage 300, and transmits the transmission data to a network 400.

Concrete product forms of the data transmitting system according to the first embodiment include, but are not limited to, a PC, a network storage such as a server device, a dedicated LSI, and a field programmable gate array (FPGA), a video on demand (VOD) server, a web server, and the like.

The host CPU 200 controls the whole of the data transmitting system. The host CPU 200 is a main processing unit executed by software, and includes a file designating unit 201, a metadata designating unit 202, a metadata analyzing unit 203, a transmission data specifying unit 204, a management information read instructing unit 205, an extent map acquiring unit 206, and a transmission data read instructing unit 207. The host CPU 200 can perform various kinds of other processes.

The file designating unit 201 designates a file including transmission data. The metadata designating unit 202 designates metadata including specifying information used to specify a position of transmission data in a file. The metadata analyzing unit 203 analyzes the designated metadata. The transmission data specifying unit 204 specifies the position of the transmission data in a designated file based on information of the analyzed metadata.

The management information read instructing unit 205 gives an instruction for reading management information in the storage 300. The management information is metadata of actual data stored in the storage 300. For example, the management information includes mapping information between actual data and a recording region of the storage 300. The management information further includes other various information.

The extent map acquiring unit 206 analyzes the read management information, and acquires an extent map (map information) of the transmission data. The extent map is information specifying a storage position of data in the storage 300. The details of the extent map will be described later.

The transmission data read instructing unit 207 instructs the data transferring apparatus 100 to read data and transmit data.

The storage 300 stores therein various kinds of data including transmission data. Concrete implementation forms of the storage 300 include, but are not limited to, an SSD, an HDD, an SD memory card, and the like. The storage 300 may have a RAID function. An interface with the storage 300 in the data transferring apparatus 100 may have a RAID function.

On behalf of the host CPU 200, the data transferring apparatus 100 reads data from the storage 300, performs communication processing on the read data, and transmits the read data to the network 400. The data transferring apparatus 100 includes a command issuing unit 110, a notification distributing unit 120, a transmission data extracting unit 130, and a communication processing unit 140.

The command issuing unit 110 issues a command such as a data read command to the storage 300. The notification distributing unit 120 receives a response notification for the issued command, and distributes the received response notification to either of the host CPU 200 and the data transferring apparatus 100. The transmission data extracting unit 130 receives data read from the storage 300, and extracts necessary data from the received data. The communication processing unit 140 performs communication processing on the extracted data according to a predetermined communication protocol, and then transmits the extracted data to the network 400.

The communication processing unit 140 corresponds to the above-described TOE. Concrete implementation forms of the data transferring apparatus 100 include an FPGA, a dedicated LSI, and the like. The data transferring apparatus 100 may be implemented using a PCI card or a PCI-Express card. An implementation form is not limited to these examples.

The network 400 can be configured with any wireless communication or any wired communication such as the Ethernet or the wireless LAN.

For example, when the data transmitting system is a PC, a server device, or the like, the host CPU 200 may be connected with the data transferring apparatus 100 through a chip set, a PCI Express, or the like. For example, when the data transmitting system is a SoC or the like, the host CPU 200 may be connected with the data transferring apparatus 100 through a dedicated bus or the like. For example, the storage 300 is connected with the data transferring apparatus 100 according to a SATA, a SAS, an SCSI, an SD memory card standard or the like. The standards are exemplary, and any other connection scheme can be applied.

The data transferring apparatus 100 may be configured with either hardware or software regardless of an implementation form. A hardware-based configuration is desirable in terms of processing efficiency. Further, communication processing performed by the communication processing unit 140 is not limited to specific processing. Examples of the communication processing performed by the communication processing unit 140 include TCP/IP-based protocol processing, UDP/IP-based protocol processing, RTP/FEC-based protocol processing for an IPTV, Ethernet processing, and wireless processing.

In the case of a protocol establishing a connection with an opposing device such as a TCP, an operation which will be described below is performed at the stage of data transfer after a connection with a counterpart is established.

The storage 300 manages data in, for example, units of sectors, clusters, or pages. Here, for simplicity, the units are referred to collectively as a "blocks." Since data dealt by the user is not dealt in units of blocks, the storage 300 is typically accessed through a file system. The file system refers to a system in which file data of byte units are mapped to recording regions of block units in the storage 300. The file system stores the management information together with data in a predetermined region on the storage 300.

When file data is read from the storage 300, the management information is first read, the read management information is analyzed, and the extent map is obtained as information representing a block in which desired file data is actually stored. Then, desired data is obtained by reading data (block data) of each block according to the acquired extent map and extracting a necessary part from the block data.

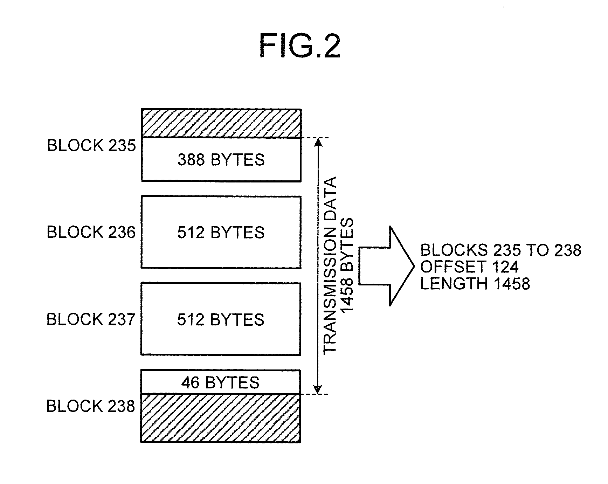

Next, the details of the extent map will be described. FIG. 2 is a diagram illustrating an exemplary configuration of an extent map. FIG. 2 illustrates an example in which one block is 512 bytes, and a part of data of a desired file is stored in blocks 235 to 238. The data starts from a 124-th byte of the block 235. For this reason, information (valid data position information) representing the position of data is represented, for example, such that an offset is 124 bytes, and a length is 1458 bytes. The extent map includes block position information and valid data position information. The block position information is information representing a position of a block in which data is stored. In the example of FIG. 2, the blocks 235 to 238 correspond to the block position information. The valid data position information is information representing a position at which valid data is stored in a block represented by the block position information. As described above, the extent map is information capable of specifying a position of the storage 300 at which desired data is stored.

In the example of FIG. 2, a byte position at which data is stored, that is, the valid data position information is represented by an offset and a length. For example, the valid data position information is represented by a start byte position and an end byte position. As described above, any expression form of the valid data position information can be used as long as the position of valid data can be specified. In the example of FIG. 2, an example of a single data row of 1458 bytes is illustrated, but the extent map may be represented by a plurality of discrete data rows. In other words, for example, a single extent map may include two data rows, that is, information representing 1458 bytes among the blocks 235 to 238 and information representing 2000 bytes among blocks 346 to 350.

The above example can be applied to the extent-based file system. The present embodiment can be also applied to the block (cluster)-based file system. In the block (cluster)-based file system, a list of blocks (clusters) is used instead of an extent. If a list of blocks (clusters) is regarded as a special case of an extent (one in which a length of an extent is fixed to 512 bytes), the block (cluster)-based file system can be considered as the extent-based file system. The following description will proceed using the terminology used in the extent-based file system and can be applied to both file systems.

In a known technique, typically, a host CPU executes a device driver or control software such as file system software based on a file data read request of an application, to thereby acquire an extent map. Then, the host CPU reads desired data from a storage according to the extent map, and transmits the read data to the application. In contrast, in the present embodiment, the data transferring apparatus 100 performs a part of processing performed by the host CPU 200 on behalf of the host CPU 200, and transmits data to the network 400 as is. A concrete processing flow will be described below.

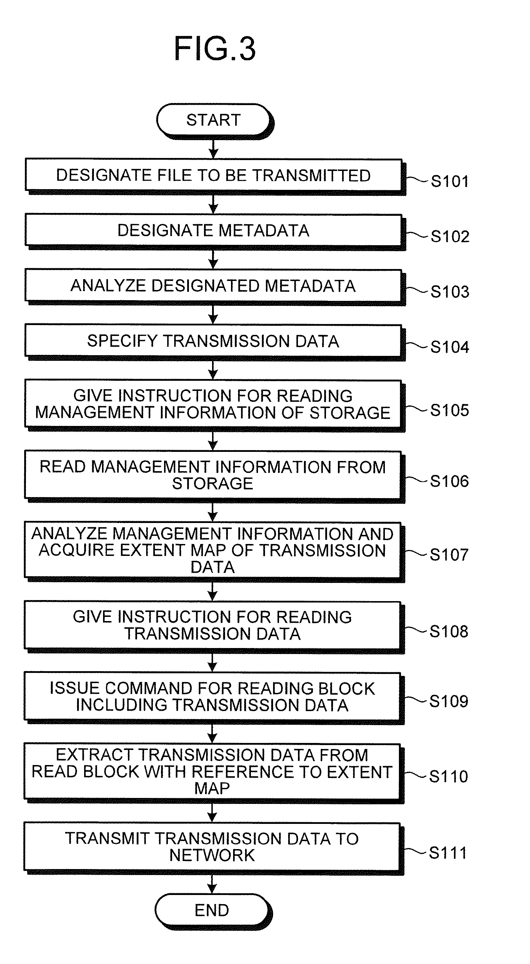

FIG. 3 is a flowchart illustrating an overall flow of a data transfer process according to the first embodiment.

First, the file designating unit 201 specifies a file to be transmitted, for example, according to processing of application software, and designates the specified file to the transmission data specifying unit 204 (step S101). As a typical example, the file designating unit 201 specifies a file requested from another device connected to the network 400 as a file to be transmitted.

The metadata designating unit 202 designates metadata used to specify transmission data (step S102).

The specifying information included in the metadata may be simply information representing a byte position of the transmission data in the designated file. For example, an example is considered in which in a file of 1000 bytes, 3 data clusters, that is, data from a 10-th byte to a 99-th byte, data from a 200-th byte to a 299-th byte, and data from a 500-th byte to a 699-th byte are transmitted. In this case, the specifying information is represented by a list data form or a table form including three pieces of data having a (head position, length) form, that is, (10, 90), (200, 100), and (500, 200). When data is streaming data of video or audio content, the specifying information may be information representing a reproduction period of time. For example, an example is considered in which in content whose total length is 2 hours, data of 15 minutes from a point in time after 10 minutes from the start and data of 20 minutes from a point in time after 30 minutes from the start are transmitted. In this case, the specifying information may be represented by two pieces of data having a (start time [sec], time length [sec]) form, that is, (600, 900) and (1800, 1200).

For example, the specifying information may be a position designated by the viewer in an opposing device. Further, the specifying information may be a position which is recommended to the user from the data transmitting system side such that, for example, a scene in which a specific actor is shown in content is automatically extracted.

Next, the metadata analyzing unit 203 analyzes the designated metadata (step S103).

Next, the transmission data specifying unit 204 specifies transmission data from the designated file based on information of the analyzed metadata (step S104). The transmission data specifying unit 204 transfers information including the position of the specified transmission data and the length of the transmission data or a set of the pieces of information to the management information read instructing unit 205.

The management information read instructing unit 205 instructs the command issuing unit 110 of the data transferring apparatus 100 to issue a command for reading the management information of the file system from the storage 300 based on the transferred transmission data information (step S105).

The storage 300 reads the management information based on the command issued from the command issuing unit 110 according to the instruction, and transfers the read management information to the extent map acquiring unit 206 (step S106).

The extent map acquiring unit 206 analyzes the read management information, and acquires an extent map of the read transmission data (step S107). The extent map acquiring unit 206 may be configured to acquire an extent map which is cashed in advance. In this case, the extent map acquiring unit 206 needs to read the extent map in advance through a similar process.

Next, the transmission data read instructing unit 207 transfers the acquired extent map to the data transferring apparatus 100, and instructs the data transferring apparatus 100 to read and transmit the corresponding data (step S108).

The command issuing unit 110 of the data transferring apparatus 100 receives the transmitted extent map, and issues, to the storage 300, a command for reading a block actually including transmission data according to the received extent map (step S109).

The command issuing unit 110 issues a command according to an I/F specification of the storage 300 side. Typically, there are cases in which there are a limitation that the number of read blocks that can be designated at a time is limited, a limitation that it is difficult to designate discrete blocks at the same time, and the like. For this reason, there is a case in which a single extent map is divided into a plurality of command groups. As described above, the command issuing unit 110 also performs a process of dividing commands for a single extent map as necessary.

When the command issuing unit 110 sequentially issues the commands to the storage 300, block data including transmission data is transmitted from the storage 300 as a response to the command. The transmission data extracting unit 130 receives the transmission data transmitted from the storage 300.

In step S108, the transmission data read instructing unit 207 outputs an instruction to the command issuing unit 110, and transfers information representing a position of block data, at which the transmission data is read, read by an individual command to the transmission data extracting unit 130. In other words, in the example of FIG. 2, the transmission data read instructing unit 207 transfers the block position information such that the blocks 235 to 238 to the command issuing unit 110, and transfers the valid data position information such that an offset of 124 bytes and a length of 1458 bytes to the transmission data extracting unit 130.

The transmission data extracting unit 130 extracts a data row of a desired byte number (1458 bytes in the example of FIG. 2) from the received block data according to the valid data position information, and transfers the extracted data row to the communication processing unit 140 (step S110). The communication processing unit 140 transmits the extracted transmission data to the network 400 while transmitting or receiving control information to or from an opposing device as necessary (step S111).

Next, I/F processing with the storage 300 will be described in detail. First, an example will be described in which the storage 300 includes a SATA I/F of a typical SSD, an HDD, or the like and has a function (DMA function) of a bus master. In this case, for example, the command issuing unit 110 causes data describing a command called a descriptor to be prepared in advance on predetermined memory as a command for the storage 300. The storage 300 reads the command from the memory. As described above, the command issued by the command issuing unit 110 is transferred to the storage 300.

The descriptor typically has a ring buffer form, and in a known typical technique, the descriptor is placed on the main memory (a main memory device (not illustrated)) used by the host CPU 200. In the present embodiment, the same form may be used, but it is desirable to use memory in the data transferring apparatus 100 or memory connected directly to the data transferring apparatus 100 since a load is note given to the main memory and the host CPU 200.

A destination address at which the block data read from the storage 300 is written by the DMA is also designated to each descriptor in advance. The distribution of transferring the management information read from the storage 300 to the host CPU 200 and transferring the transmission data to the communication processing unit 140 is implemented by this address designation. In other words, when the management information is transferred to the host CPU 200, since the transfer is typically performed through the main memory, an address of the main memory is described as the destination address described in the descriptor. When the transmission data is transferred to the transmission data extracting unit 130, an address of the transmission data extracting unit 130 is described as the destination address. Thus, the read data can be distributed such that read data is written at the destination address designated through the descriptor by the storage 300.

The storage 300 executes a command, reads data, and then gives a command completion notification to the notification distributing unit 120. For example, the storage 300 gives the completion notification through an interrupt or the like. More specifically, for example, the storage 300 notifies of how far a command has been processed, that is, a descriptor up to which processing has been performed among a group of descriptors of a ring buffer by setting a DONE bit representing processing completion of each descriptor.

Upon receiving the interrupt notification, the notification distributing unit 120 sequentially reads the descriptors in which the DONE bit is written (resets the DONE bit after reading), and can determine that processing has been performed up to that descriptor. Meanwhile, there may be a case in which processing of a plurality of descriptors is completed at a time.

When receiving a completion notification of a descriptor used to read the management information is received, the notification distributing unit 120 distributes the completion notification to the management information read instructing unit 205. Further, when a completion notification of a descriptor used to read the transmission data is received, the notification distributing unit 120 distributes the completion notification to the transmission data read instructing unit 207. In this way, the notification distributing unit 120 distributes the respective completion notifications.

Upon receiving the completion notification from the notification distributing unit 120, the management information read instructing unit 205 determines that the reading of the management information has been completed, and instructs the extent map acquiring unit 206 to acquire the extent map.

Typically, the transfer of block data by the storage 300 has predetermined latency. For this reason, there are cases in which the host CPU 200 gives an instruction for simultaneously reading a plurality of blocks without waiting for a completion notification from the storage 300 each time as a response to a transfer instruction. In this case, in this state, synchronization is not obtained among three parties, that is, the transmission data read instructing unit 207 (and the management information read instructing unit 205), the storage 300, and the transmission data extracting unit 130. For this reason, for example, a synchronization process is performed by the following techniques.

A first technique is a technique useful when reading is performed in the same order as an order in which the storage 300 receives a command. In this technique, when the transmission data read instructing unit 207 gives an instruction for reading a plurality of blocks from the storage 300, the valid data position information in a corresponding block is transmitted to the transmission data extracting unit 130 in the same order as an order in which the instruction is given. For example, the transmission data extracting unit 130 may queue the received valid data position information. When block data is received from the storage 300, the transmission data extracting unit 130 can read the queued valid data position information in the queued order one by one and associate the valid data position information with the block data.

A second technique is a technique used, for example, when the storage 300 gives priority to efficiency of internal processing or the like, and so reading is performed in a different order from an order in which a command is received. In this case, for example, a technique of designating different addresses as destination addresses of blocks is considered.

For example, when eight read commands are given to the storage 300 at the same time, the transmission data read instructing unit 207 designates different transfer destination addresses to the eight commands, respectively. As described above, in the present embodiment, an address of the transmission data extracting unit 130 is designated as the transfer destination address. When the second technique is applied, for example, when an instruction for reading a maximum of four blocks is given by a single command, different address regions among address regions of the transmission data extracting unit 130 are designated as transfer destination addresses respectively corresponding to the respective commands.

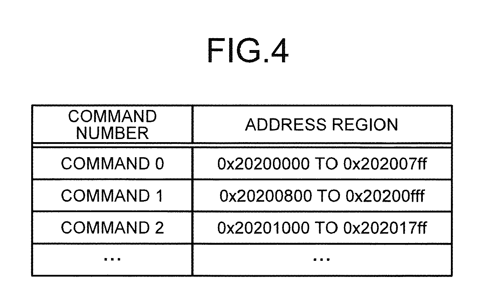

FIG. 4 is a diagram illustrating an example of correspondence between a command and an address region. FIG. 4 illustrates an example in which an address region of the transmission data extracting unit 130 ranges from 0x20200000 to 0x202fffff. A command number is information identifying a command. As illustrated in FIG. 4, commands are associated with address regions in advance such that a 512x4 byte region of 0x20200000 to 0x202007ff corresponds to a command 0, a 512x4 byte region of 0x20200800 to 0x20200fff corresponds to a command 1, and a 512x4 byte region of 0x20201000 to 0x202017ff corresponds to a command 2. The transmission data read instructing unit 207 instructs the command issuing unit 110 to designate the head of a corresponding address region for a command to be issued.

Through this operation, the transferred block data is transferred to a different address region in the transmission data extracting unit 130. For example, when the received block data is data written at an address starting from 0x20201200, the transmission data extracting unit 130 can specify that the corresponding data is second block data from the head of the command 2. Further, for example, when a notification of the valid data position information illustrated in FIG. 2 is given for block data read by the command 2, it is understood that the block data is data of a 389-th byte to a 900-th byte in valid data.

The transmission data read instructing unit 207 notifies the transmission data extracting unit 130 of 8 pieces of valid data position information. At this time, the transmission data read instructing unit 207 gives a notification so that a command corresponding to the valid data position information can be specified such as the valid data position information corresponding to the command 0, the valid data position information corresponding to the command 1, the valid data position information corresponding to the command 2, and the like.

Through this operation, the transmission data extracting unit 130 can determine a command to which the received block data and the valid data position information correspond together. In other words, the transmission data extracting unit 130 can associate a command with the block data and the valid data position information.

As the destination address region of block data is divided as described above, even when an order of block data received by the transmission data extracting unit 130 is different from an order (typically, an order of transmission to a network) of an original data row of the received block data, a command on which the data is based can be determined by recognizing the destination address of the block data, and thus the data row can be arranged in the original order.

The use of an address is an example of the present embodiment. Information other than an address may be used as long as the information can be used to specify block data. The details of the storage 300 I/F are exemplary, and the present invention is not limited to this example.

There are cases in which it is difficult for the storage 300 to complete execution of a requested command due to a certain reason such as an internal error. In this case, the storage 300 gives an error notification to the data transferring apparatus 100. In this case, since it is difficult for the host CPU 200 to obtain error information in this state, the data transferring apparatus 100 may be configured to relay the error notification to the host CPU 200 so that the host CPU 200 can be also aware of abnormality as in the related art.

Further, the notification distributing unit 120 need not be necessarily disposed in the data transferring apparatus 100 and may be disposed in the host CPU 200. Further, a part of processing of the command issuing unit 110 may be performed at the host CPU 200 side. However, it is preferable that the process of dividing a single transmission data read instruction into a plurality of commands be performed on the data transferring apparatus 100 in terms of processing efficiency.

As described above, in the data transferring apparatus according to the first embodiment, data on the storage 300 can be transmitted to the network 400 based on a request from an application without giving a load of the data transfer process to the host CPU 200. Thus, the processing efficiency and the data transfer rate can be improved. Further, since grades of the host CPU 200 and a chip set, memory, a motherboard, and the like which are subordinate to the host CPU 200 can be lowered, a low cost device can be implemented. Further, since a great part of the data transfer process can be performed by the hardware process of the data transferring apparatus 100 rather than the software process of the host CPU 200, power consumption can be reduced.

### (Second embodiment)

In a second embodiment, a plurality of communication connections are set for data transfer, and flow control is performed independently for each connection. For example, when read requests or content delivery requests are simultaneously received from a plurality of client terminals connected to a network storage such as a network attached storage (NAS) or a VOD server or a plurality of applications of a client terminal, an operation of reading data from a storage and transmitting the read data to a network through a plurality of independent connections can be performed.

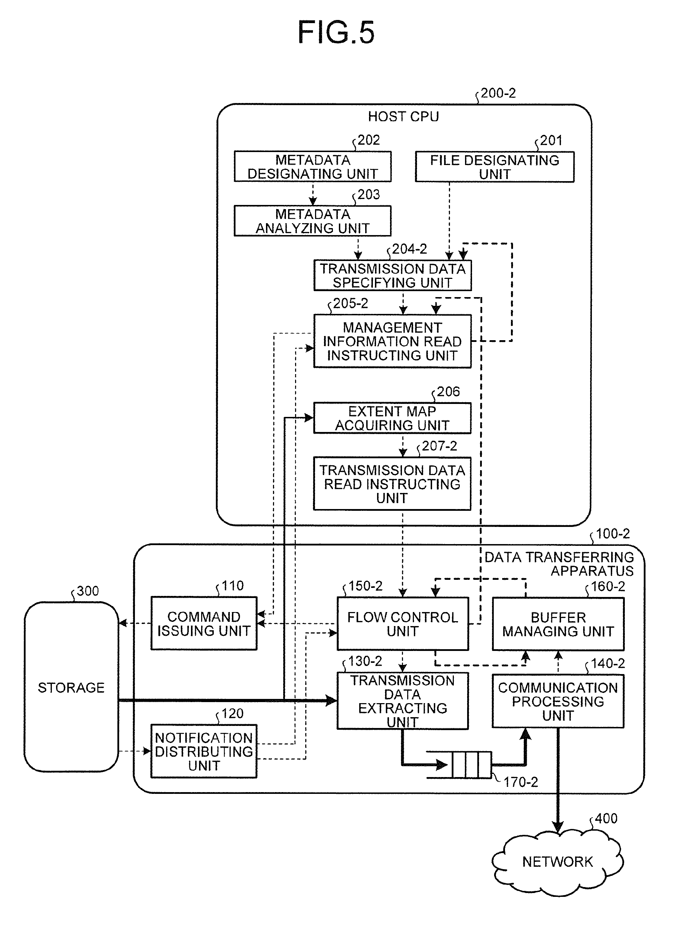

FIG. 5 is a block diagram illustrating a schematic exemplary configuration of a data transmitting system according to the second embodiment.

A host CPU 200-2 according to the second embodiment includes a file designating unit 201, a metadata designating unit 202, a metadata analyzing unit 203, a transmission data specifying unit 204-2, a management information read instructing unit 205-2, an extent map acquiring unit 206, and a transmission data read instructing unit 207-2 as illustrated in FIG. 5.

The second embodiment is different from the first embodiment in functions of the transmission data specifying unit 204-2, the management information read instructing unit 205-2, and the transmission data read instructing unit 207-2. The remaining configurations and functions are the same as in FIG. 1 which is the block diagram of the first embodiment and thus denoted by the same reference numerals, and a description thereof will not be repeated.

A difference with the first embodiment lies in that the transmission data specifying unit 204-2 and the management information read instructing unit 205-2 perform processing for each connection. Further, a difference with the first embodiment lies in that the transmission data read instructing unit 207-2 gives a data read instruction together with connection identification information identifying a connection.

The data transferring apparatus 100-2 according to the second embodiment includes a command issuing unit 110, a notification distributing unit 120, a transmission data extracting unit 130-2, a communication processing unit 140-2, a flow control unit 150-2, a buffer managing unit 160-2, and a data buffer 170-2.

The second embodiment is different from the first embodiment in that the flow control unit 150-2, the buffer managing unit 160-2, and the data buffer 170-2 are added, and functions of the transmission data extracting unit 130-2 and the communication processing unit 140-2 are different. The remaining configurations and functions are the same as in FIG. 1 which is the block diagram of the first embodiment and thus denoted by the same reference numerals, and a description thereof will not be repeated.

The data buffer 170-2 buffers data for each connection for delivery of data between the transmission data extracting unit 130-2 and the communication processing unit 140-2. In the following, a region storing data of each connection in the data buffer 170-2 may be referred to simply as a "buffer."

The buffer managing unit 160-2 manages a state (buffer state) of the data buffer 170-2 for each connection. The flow control unit 150-2 performs data flow control for each connection based on a notification from the buffer managing unit 160-2. In FIG. 5, transfer of flow control information is indicated by a dashed line.

The transmission data extracting unit 130-2 is different from that of the first embodiment in that the transmission data extracting unit 130-2 stores extracted transmission data in the data buffer 170-2. The communication processing unit 140-2 is different from that of the first embodiment in that the communication processing unit 140-2 reads transmission data from the data buffer 170-2 according to the buffer state managed by the buffer managing unit 160-2.

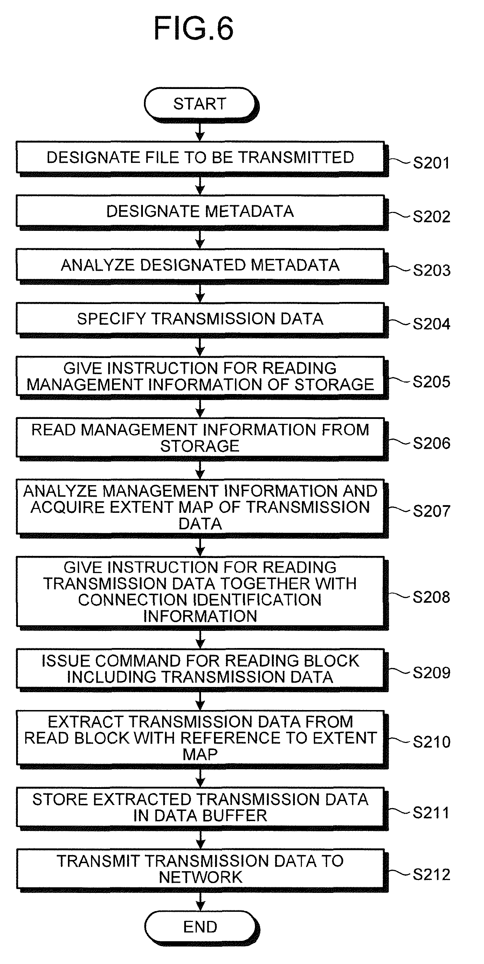

FIG. 6 is a flowchart illustrating an overall flow of a data transfer process according to the second embodiment.

The process of steps S201 to step S207 is the same as the process of steps S101 to step S107 in FIG. 3 illustrating the data transfer process according to the first embodiment, and thus a description thereof will not be repeated.

In the present embodiment, the transmission data read instructing unit 207-2 transfers the connection identification information to the data transferring apparatus 100-2 together with the acquired extent map, and instructs the data transferring apparatus 100-2 to read and transmit the data (step S208). For example, the transmission data read instructing unit 207-2 transfers connection identification information received from an application to the data transferring apparatus 100-2.

In the data transferring apparatus 100-2, the flow control unit 150-2 receives a data read instruction. The flow control unit 150-2 holds the extent map for each connection. In other words, the flow control unit 150-2 temporarily holds data read requests of a plurality of connections. Then, when a notification of a connection in which there is a free space in a buffer is received from the buffer managing unit 160-2, the flow control unit 150-2 instructs the command issuing unit 110 to issue a read command for reading transmission data of the notified connection.

The command issuing unit 110 issues the read command for reading a block including transmission data according to the extent map received from the flow control unit 150-2 (step S209). The process of step S210 is the same as the process of step S110 of the first embodiment, and thus a description thereof will not be repeated.

In the second embodiment, the transmission data extracting unit 130-2 stores the transmission data extracted from the block data in the data buffer 170-2 (step S211). Further, the communication processing unit 140-2 reads the transmission data from the data buffer 170-2, and transmits the transmission data to the network 400 (step S212).

Since the buffers for all connections are empty in the initial state, the flow control unit 150-2 instructs the command issuing unit 110 to give an instruction for reading the transmission data. When transmission of data in the same connection is continuously requested, the flow control unit 150-2 may temporarily hold the request and then be on standby for a buffer empty notification from the buffer managing unit 160-2.

The size of data for which the command issuing unit 110 is requested to issue a command is equal to or less than a free space size (available space) of a buffer. For example, the data buffer 170-2 secures a buffer of 128 KB for each connection, and when a free space of 64 KB or more is available in a buffer of each connection, the buffer managing unit 160-2 notifies the flow control unit 150-2 of the free space of the buffer of the corresponding connection.

Of course, the extent map transferred from the host CPU may illustrate data having the size larger than the above-described size. However, data for which the flow control unit 150-2 makes a request for issuing a command at a time is partial data having the size of 64 KB or less corresponding to the free space. For this reason, the flow control unit 150-2 requests the command issuing unit 110 to read the partial data. At the same time, the flow control unit 150-2 transfers the valid data position information included in the partial data to the transmission data extracting unit 130-2. Then, the flow control unit 150-2 holds a position of the partial data that has been subjected to the read process as progress information for each connection, and ends the command issue request.

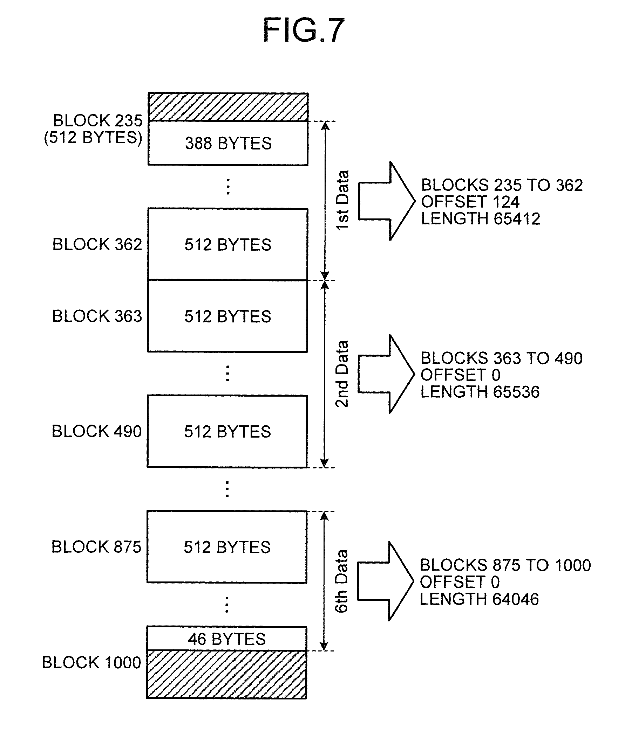

The above process will be described with reference to FIG. 7. FIG. 7 is a diagram illustrating an exemplary configuration of an extent map. FIG. 7 illustrates an example of an extent map given from the host CPU 200-2 in which the block position information is represented by blocks 235 to 1000, the valid data position information is represented by an offset of 124 bytes and a length of 391602 bytes. In this case, for example, initial partial data is 65412 bytes of the blocks 235 to 362 which is a region good to secure 64 KB or less. Further, the valid data position information of the partial data is an offset of 124 bytes and a length of 65412 bytes. The flow control unit 150-2 requests the command issuing unit 110 to issue a read command for reading the blocks 235 to 362. At the same time, the flow control unit 150-2 transfers the valid data position information such as the offset of 124 bytes and the length of 65412 bytes to the transmission data extracting unit 130-2. The flow control unit 150-2 holds information representing that a block to be processed next is the block 363 or a 65413-th byte as the progress information, and ends the process. The flow control unit 150-2 is on standby for a next buffer empty notification from the buffer managing unit 160-2.

Each data size such as 64 KB described above is exemplary, and the present invention is not limited to this example. Further, the data size need not be constant, and the present embodiment can be applied even when the size changes each time.

When the partial data process ends and then a notification representing that a data buffer of another connection is empty is received from the buffer managing unit 160-2, the flow control unit 150-2 similarly performs the partial data read request process on the notified connection. Then, when transmission of all data represented by the extent map given in connection with a certain connection is completed (when a read request of sixth partial data is completed in the example of FIG. 7), transmission of all data represented by the extent map given in the corresponding connection is completed. The flow control unit 150-2 notifies the host CPU 200-2 of the fact that transmission of all data has been completed.

In the host CPU 200-2, for example, the management information read instructing unit 205-2 receives the notification, and can perform a data transmission process from a next application, that is, a series of processes starting from the management information read instructing unit 205-2. On the other hand, the management information read instructing unit 205-2 suspends reading of next management information until the notification is received, to thereby implement flow control with the transmission data specifying unit 204-2.

The host CPU 200-2 need not receive the notification necessarily through the management information read instructing unit 205-2. For example, the notification may be received through the extent map acquiring unit 206 or the transmission data read instructing unit 207-2. In other words, as long as back pressure is eventually transferred to an application, the notification may be received through any component.

In the above example, the data transferring apparatus 100-2 receives the extent maps at the same time such that a single extent map is received for each connection, but the data transferring apparatus 100-2 may be configured to receive two or more extent maps. Even in the configuration in which a plurality of extent maps are received, the number of extent maps is necessarily finite. Thus, the above-described technique can be applied by configuring a system so that an extent map is not received any more when a maximum of the number of extent maps are received.

The transmission data extracting unit 130-2 receives the valid data position information from the flow control unit 150-2 as described above, and writes the transmission data in the data buffer 170-2 according to the valid data position information. A write destination address of the data buffer 170-2 is generated by the flow control unit 150-2 and transferred to the transmission data extracting unit 130-2.

For example, the data buffer 170-2 is assumed to secure 128 KB for each connection as described above, and a head address of a buffer of each connection is assumed to be allocated as follows.
Head address of buffer of connection 0 = 0x00000000
Head address of buffer of connection 1 = 0x00020000
Head address of buffer of connection 2 = 0x00040000

Further, it is assumed that process of the connection 1 is currently being performed, and reading of data illustrated in FIG. 7 is first requested. In this case, a destination address of initial partial data is 0x00020000, and a destination address of next partial data is 0x0002ff85 to which 65413 bytes are added.

When the destination address is increased in units of partial data sizes in this way, a series of data is developed in the data buffer 170-2 in the original state. For example, when a buffer is a ring buffer of a byte unit, a byte next to 0x0003ffff is written in 0x00020000.

The flow control unit 150-2 transfers the destination address to the transmission data extracting unit 130-2 together with the valid data position information. The transmission data extracting unit 130-2 writes the extracted transmission data from an address according to the destination address. As a result, the transmission data can be appropriately developed in the data buffer 170-2 for each connection.

The buffer managing unit 160-2 manages a write position of a data supply side of a buffer of the data buffer 170-2 of each connection, a read position of a data consumption side, and a free space state of each connection.

For example, when a read request for partial data is given to the command issuing unit 110 and a response notification to the read request is received from the storage 300, the flow control unit 150-2 can determines a position of a buffer of a corresponding connection up to which data is written. Thus, the flow control unit 150-2 notifies the buffer managing unit 160-2 of the position at which data is written as the progress information.

For example, when writing of the initial partial data of FIG. 7 is completed, the flow control unit 150-2 notifies the buffer managing unit 160-2 of information such as a 65413-th byte together with the connection identification information. Based on this notification, the buffer managing unit 160-2 can detect that the position of the data supply side of the buffer for the connection 1 is the 65413-th byte.

When the communication processing unit 140-2 reads data from the data buffer 170-2 in order to transmit the data, the read position of the data consumption side moves. For this reason, the communication processing unit 140-2 notifies the buffer managing unit 160-2 of a byte position (to be exact, a byte position from which next reading starts) at which reading is completed for each connection.

In the initial state, the buffer has a free space of 128 KB (to be exact, 131072 bytes of 2¹⁷). When data is initially written, the free space is by 65413 bytes, and the free space size becomes 65659 bytes. Since this free space size is larger than 64 KB (to be exact, 65536 bytes of 2¹⁶), the buffer managing unit 160-2 transmits the buffer empty notification to the flow control unit 150-2.

Thereby, the flow control unit 150-2 outputs a read request for next partial data (65536 bytes in the example of FIG. 7). When data is written according to the read request, the buffer size is further reduced and becomes 23 bytes. Since it is smaller than 64 KB, the buffer managing unit 160-2 does not make the buffer empty notification.

Thus, the flow control unit 150-2 suspends reading of next partial data. Thereafter, when the communication processing unit 140-2 reads data, for example, by 1 KB (1024 B), the free buffer size increases to 1047 bytes. When the communication processing unit 140-2 continuously reads data and the free space size is 65536 bytes or more, the buffer managing unit 160-2 gives the buffer empty notification to the flow control unit 150-2 at this stage.

In the communication processing unit 140-2, a transmission rate is restricted according to a communication protocol specification, a band of a network, or the like through which processing is performed. For example, when flow control or congestion control is performed as in the TCP protocol, the transmission rate is lowered according to a congestion state of an opposing device or a network, and the progress state in which data is read from the data buffer 170-2 is delayed. According to the present embodiment, in this case, flow control of up to the top application can be appropriately implemented. On the other hand, in the present embodiment, even when an opposing device receives sufficient data, the communication processing unit 140-2 determines a position up to which data is transmitted with reference to a current position of the data supply side. Through this operation, appropriate control can be performed such that data is appropriately transmitted by an amount with which a buffer is filled.

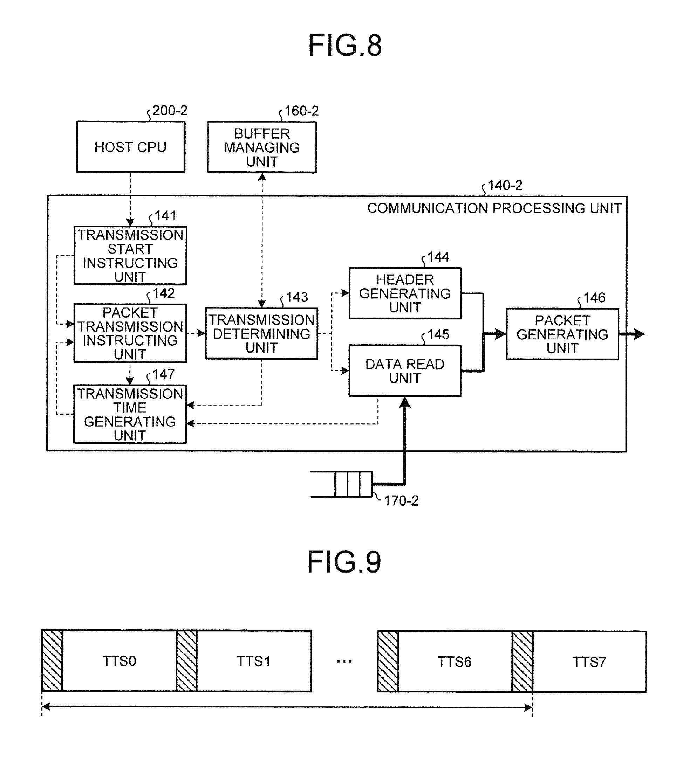

Next, a concrete exemplary configuration in which the communication processing unit 140-2 uses a real time communication protocol as such as the RTP will be described.. FIG. 8 is a block diagram illustrating an exemplary configuration of the communication processing unit 140-2 according to the second embodiment.

The communication processing unit 140-2 includes a transmission start instructing unit 141, a packet transmission instructing unit 142, a transmission determining unit 143, a header generating unit 144, a data read unit 145, a packet generating unit 146, and a transmission time generating unit 147 as illustrated in FIG. 8.

The transmission start instructing unit 141 receives a data transmission start instruction from the host CPU 200-2, and transmits a data transmission start request to the packet transmission instructing unit 142 according to the received instruction. Upon receiving the transmission start request, the packet transmission instructing unit 142 gives a transmission instruction of each subsequent packet. The transmission determining unit 143 performs various kinds of determination of a transmission process. The header generating unit 144 generates a header of a packet. The data read unit 145 reads a data part (payload) of a packet from the data buffer 170-2. The packet generating unit 146 generates a packet based on the generated header and the read data. The transmission time generating unit 147 generates a transmission time of a packet (a next packet) to be transmitted next to a packet including the read data.

A concrete operation will be described below. First of all, the host CPU 200-2 designates connection identification information of a connection through which packet transmission starts, and gives the transmission start instruction to the transmission start instructing unit 141. The transmission start instructing unit 141 requests the packet transmission instructing unit 142 to generate a first packet.

The packet transmission instructing unit 142 includes an internal timer, and constantly updates a current timer count value (that is, a current time) of, for example, 27 MHz and 32 bits. The packet transmission instructing unit 142 holds a transmission time of a next packet, for example, in table form for each connection. The packet transmission instructing unit 142 sequentially reads a transmission time form the table, compares the read transmission time with the current timer count value, and gives a packet generation instruction for the corresponding connection when the read transmission time exceeds the current timer count value.

For example, it is assumed that a connection 1 and a connection 3 exist, 0x40000000 is held as a transmission time of a packet of the connection 1, and 0x40000100 is held as a transmission time of a packet of the connection 3. In this case, until the current timer count value reaches 0x3fffffff, the packet transmission instructing unit 142 does not give the packet generation instruction. When the current timer count value becomes 0x40000000, the packet transmission instructing unit 142 gives the packet transmission instruction for the connection 1. When the current timer count value becomes 0x40000100, the packet transmission instructing unit 142 gives the packet transmission instruction for the connection 3.

The transmission determining unit 143 performs packet transmission determination based on the packet transmission instruction. For example, the transmission determining unit 143 acquires the current write position of the data supply side from the buffer managing unit 160-2, and determines whether the position has exceeded the end of data read for current packet transmission. When it is determined that the position has exceeded the end of data, the transmission determining unit 143 determines that transmission can be performed since it means that data to be transmitted has been already prepared. When it is determined that transmission can be performed, the header generating unit 144, the data read unit 145, and the packet generating unit 146 operate to transmit a packet.

For example, the transmission time generating unit 147 reads the data, generates a transmission time of a next packet, and transfer the generated transmission time to the packet transmission instructing unit 142. For example, at this time, the packet transmission time to be generated is calculated based on a packet transmission interval (referred to as "P [sec]") of a data stream which is currently being transmitted and a time (referred to as "T0 [sec]") of a transmission start point in time. For example, a transmission time of an N-th packet is T0 + (N - 1)xP.

The transmission time generating unit 147 may calculate the transmission time using T0 + OFS/BR based on a byte offset (referred to as "OFS [Byte]") of a head byte of data to be stored in a packet to be transmitted next from a transmission start byte and based on a bit rate (referred to as "BR [Byte/sec]") of a data stream.

The above formulae are basically the same calculation methods. In the above example, for simplicity, [sec] is used as a unit of a time, but a unit of a clock counter of 27 MHz may be used.

When the current write position of the data supply side from the buffer managing unit 160-2 has exceed the end of the data read for the current packet transmission, the transmission determining unit 143 determines that it is difficult to perform transmission since it means that data to be transmitted is not prepared yet. In this case, transmission of a packet for which the transmission instructed is given is cancelled.

Then, the transmission determining unit 143 outputs an instruction for generating a transmission time of a next packet to the transmission time generating unit 147. At this time, for example, the packet transmission time to be generated may be a time obtained by adding the packet transmission interval P to a current time or any other time. Further, depending on a setting from the host CPU 200-2, a process of notifying the host CPU 200-2 of a so-called buffer underflow state in which transmission data is not prepared yet as an abnormal state may be performed. In this case, for example, the host CPU 200-2 may perform an error processing such as outputting a notified error as a log.

Further, for example, when data being transmitted is a transmission packet including an MPEG Timestamped Transport Stream (TTS) packet (192 bytes which is the sum of 4 byte time stamp value+188 byte TS packet), a time stamp value of the TTS packet of the head stored in the transmission packet is used as the transmission time of the transmission packet.

For example, it is assumed that transmission is performed such that seven TTS packets are stored in a single transmission packet, and a TTS packet from which transmission starts is represented by TTS0. In this case, TTS0 to TTS6 are stored in a first transmission packet, TTS7 to TTS13 are stored in a second transmission packet, TTS14 to TTS20 are stored in a third transmission packet, and then the respective transmission packets are transmitted. At this time, a transmission time of the first transmission packet has a value based on a time stamp value of TTS0, a transmission time of the second transmission packet has a value based on a time stamp value of TTS7, and a transmission time of the third transmission packet has a value based on a time stamp value of TTS14.

Specifically, when a transmission time of a first packet is represented by T0, and a time stamp value of an N-th TTS packet is represented by TMS(N), the transmission time of the second transmission packet is T0 + TMS(7) - TMS(0), and the transmission time of the third transmission packet is T0 + TMS(14) - TMS(0).

Thus, for example, when generating the transmission time of the second transmission packet, the transmission time generating unit 147 reads data (192 bytes x 7 = 1344 bytes) of data of TTS0 to TTS6 which are data of the first packet and then further reads the time stamp value (4 bytes) in the head of TTS7. Further, for example, when generating the transmission time of the third transmission packet, the transmission time generating unit 147 reads TTS7 to TTS13 which are data of the second transmission packet and then further the time stamp value in the head of TTS14. The transmission time generating unit 147 obtains a next packet transmission time based on the read time stamp value as described above.

Further, the reading of the time stamp value may be performed subsequently to immediately previous data reading without a break. For example, 1348 bytes (= 1344 bytes + 4 bytes) may be collectively read. In this case, the overhead of memory access to a buffer can be reduced.

FIG. 9 is a diagram illustrating a row of data of TTS0 to TTS7. In FIG. 9, a hatched portion represents a portion corresponding to a 4-byte time stamp value of each TTS. In FIG. 9, an arrow portion represents a portion in which the time stamp values of TTS0 to TTS6 and next TTS7 are put together. The data read unit 145 collectively reads a region occupied by this arrow when data of the first transmission packet is read. Through this operation, since it is possible to read the time stamp value of TTS7 necessary to generate the transmission time of the next transmission packet while reading data of the first transmission packet, processing can be efficiently improved.

In the RTP-based communication protocol, for example, when the data read unit 145 completes data reading, a notification of a read portion is given to the buffer managing unit 160-2 as the progress information as described above. For example, the data read unit 145 notifies of a position that does not include a time stamp value portion to be read lastly. In the example of FIG. 9, the data read unit 145 notifies of an end position of TTS6. The data read unit 145 may be configured to notify of a position including a time stamp value portion to be read lastly as completion of reading. Here, it means that it is difficult to read the time stamp value from now on. Thus, in this configuration, for example, in the example of FIG. 9, it is necessary to hold a read last time stamp value until data of a next transmission packet is read. Further, when reading data of the second transmission packet, the data read unit 145 performs reading from next data of the held time stamp value, merges the held time stamp value with the read data, and transfers the resultant data to the packet generating unit 146.

As described above, in the data transferring apparatus according to the second embodiment, flow control can be appropriately performed even when the communication speed is delayed in addition to the effects of the first embodiment. Further, in the second embodiment, flow control can be performed for each communication connection. Thus, even when the data flow of a certain connection is stopped, an operation can be performed such that the data flows of the other connections are not affected.

### (Third embodiment)

In a third embodiment, transmission for a trick play and FEC packet transmission will be described as a more complicated operation example. The trick play represents reproduction different from normal reproduction such as fast forward and rewind. For example, a VOD server for a real time communication-based IPTV using an RTP needs to transmit a stream corresponding to reproduction by the trick play.

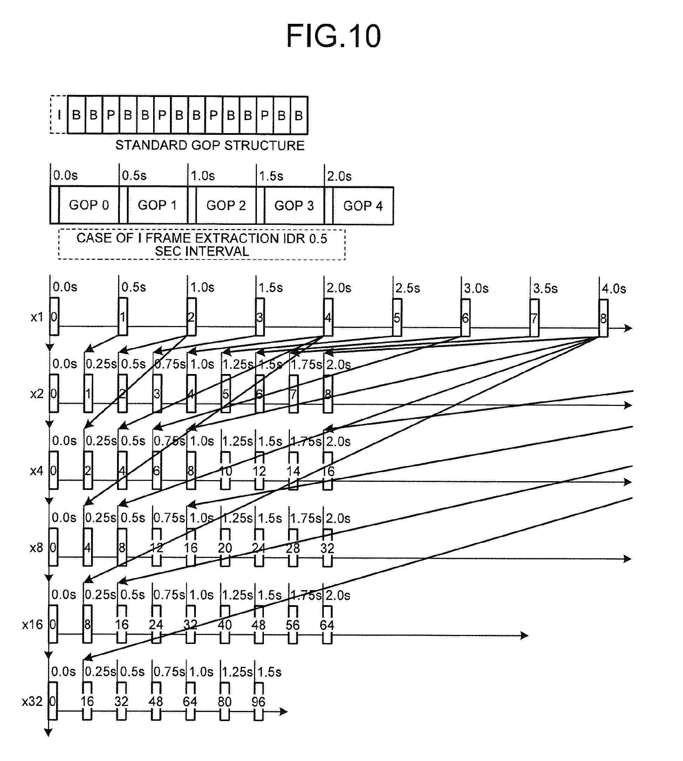

FIG. 10 is a diagram illustrating an operation outline of transmission for the trick play. In FIG. 10, a first tier illustrates an example of a standard GOP structure (a row of an I frame, a B frame, and a P frame) of the MEPG. A second tier illustrates an example of a row of GOPs. In the example of FIG. 10, GOPs are configured in units of 0.5 sec.

In the trick play, when reproduction at the fast speed in the fast forward or the like is designated, if content is reproduced fast as is without being processed, a processing speed of a device has to be increased as much, and thus the cost increases. For this reason, actually, a process of thinning out a video to be reproduced is performed.

Specifically, only the I frame of the MPEG stream data is extracted and reproduced. For example, when the I frame appears at intervals of 0.5 sec, a double speed is obtained if reproduction is performed at intervals of 0.25 sec. Further, when a thinning process is performed such that only one of two I frames is reproduced (reproduced alternately), an x4 speed is obtained. When the thinning process is further performed, an x8 speed, a x16 speed, and the like can be implemented. Further, when the order of the I frames to be reproduced is reversed, the rewind reproduction can be performed. The rewind of an x2 speed, an x4 speed, an x8 speed, an x16 speed, and the like can be implemented by a similar method to the fast forward. In FIG. 10, a lower half portion illustrates an example of an extraction rule of the I frame from an x1 speed to an x32 speed. During the trick play, the client terminal performs reproduction as described above. Thus, the VOD server needs to extract the I frame and transmit the extracted I frame to the client terminal at designated timings.

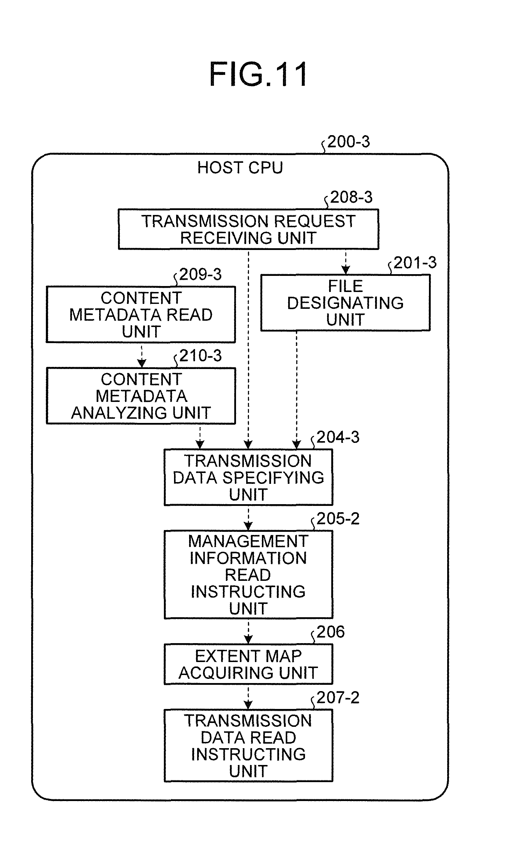

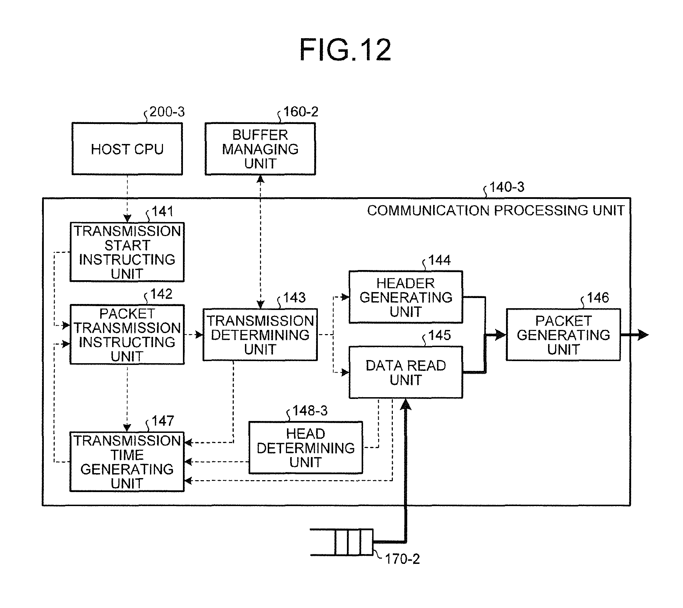

FIG. 11 is a block diagram illustrating a schematic exemplary configuration of a host CPU 200-3 according to the third embodiment. FIG. 12 is a block diagram illustrating a schematic exemplary configuration of a communication processing unit 140-3 according to the third embodiment. The data transferring apparatus and the storage have the same configurations and functions as those of the second embodiment, and thus a description thereof will not be repeated.

The host CPU 200-3 according to the third embodiment includes a transmission request receiving unit 208-3, a content metadata read unit 209-3, a file designating unit 201-3, a content metadata analyzing unit 210-3, a transmission data specifying unit 204-3, a management information read instructing unit 205-2, an extent map acquiring unit 206, and a transmission data read instructing unit 207-2 as illustrated in FIG. 11.

The third embodiment is different from the second embodiment in that the transmission request receiving unit 208-3, the content metadata read unit 209-3, and the content metadata analyzing unit 210-3 are added, the metadata designating unit 202 and the metadata analyzing unit 203 are not provided, and the file designating unit 201-3 and the transmission data specifying unit 204-3 have different functions. The remaining configuration and function are the same as in FIG. 5 which is the block diagram of the second embodiment, and thus a description thereof will not be here repeated.

The transmission request receiving unit 208-3 receives a transmission request for the trick play from the client terminal. For example, the transmission request includes information specifying content to be reproduced, a reproduction mode of the trick play (for example, the fast forward or the rewind of an x times speed), a reproduction start position (a relative period of time from when a content starts or the like).

In the present embodiment, for example, the reproduction start position or the reproduction mode of the trick play corresponds to the specifying information. Thus, the transmission request receiving unit 208-3 corresponds to the metadata designating unit 202 that designates the metadata including the specifying information.

The file designating unit 201-3 specifies a file (hereinafter, referred to as "content") that is subjected to the trick play based on the transmission request. A method of specifying content is not limited to this example. For example, the file designating unit 201-3 may be configured to specify content to be reproduced according to an operation state of the data transmitting system or the like.

The content metadata read unit 209-3 reads content metadata of content which is subjected to the trick play from the storage 300. In this way, in the present embodiment, the content metadata is stored in the storage 300. The content metadata may be stored in a memory device other than the storage 300. For example, the content metadata includes start byte positions and lengths of all I frames in a content.

The content metadata analyzing unit 210-3 analyzes the byte position of the I frame of a content with reference to the read content metadata. The transmission data specifying unit 204-3 specifies transmission data (an I frame to be transmitted) in the specified content based on information of the analyzed byte position.

The communication processing unit 140-3 of the third embodiment includes a transmission start instructing unit 141, a packet transmission instructing unit 142, a transmission determining unit 143, a header generating unit 144, a data read unit 145, a packet generating unit 146, a transmission time generating unit 147, and a head determining unit 148-3 as illustrated in FIG. 12.

The third embodiment is different from the second embodiment in that the head determining unit 148-3 is added. The remaining configuration and function are the same as in FIG. 8 which is the block diagram of the communication processing unit 140-2 of the second embodiment and thus are denoted by the same reference numerals and a description thereof will not be here repeated.

The head determining unit 148-3 determines whether a packet to be transmitted next is the head of the I frame.

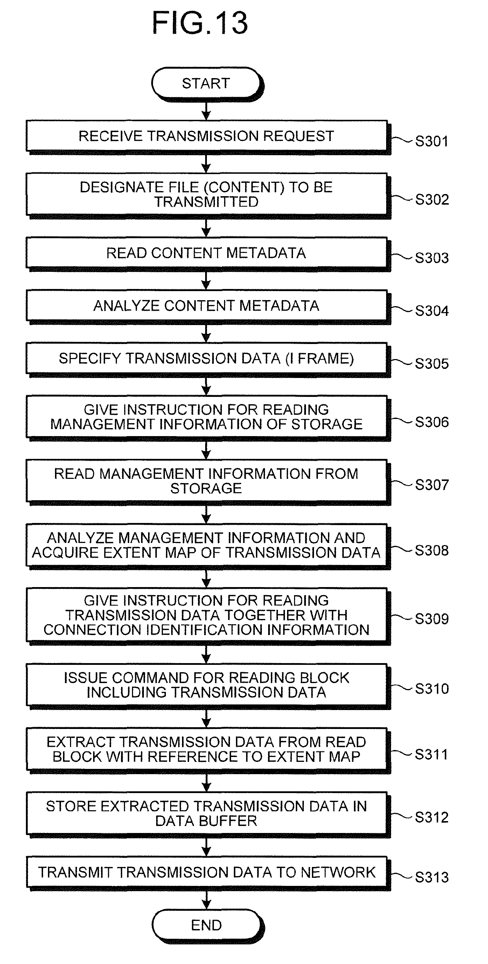

FIG. 13 is a flowchart illustrating an overall flow of a data transfer process according to the third embodiment.

First of all, the transmission request receiving unit 208-3 receives a trick play transmission request from the client terminal (step S301). For example, the reception of the transmission request is implemented by the RTSP (Real Time Streaming Protocol) in the IPTV specification. The transmission request receiving unit 208-3 transfers the reproduction mode of the trick play designated from client terminal and the reproduction start position to the transmission data specifying unit 204-3.

The file designating unit 201-3 specifies content which is to be subjected to the trick play based on the received transmission request, and designates information of the specified content to the transmission data specifying unit 204-3 (step S302).

The content metadata read unit 209-3 reads content metadata corresponding to the specified content (step S303). The content metadata analyzing unit 210-3 analyzes the read content metadata, and acquires byte positions of all I frames in the content (step S304). The content metadata analyzing unit 210-3 transfers the acquired byte position to the transmission data specifying unit 204-3.

The transmission data specifying unit 204-3 specifies an I frame to be actually transmitted using the specified content and the information of the byte position (step S305). For example, when the reproduction start time is 10 min 15 sec and the GOP interval is 0.5 sec, the transmission data specifying unit 204-3 can specify that reproduction is performed from a 1230(=(60×10 + 15)/0.5))-th GOP. When the reproduction mode of the trick play is the x4 fast forward and the extraction rule of FIG. 10 is applied, the I frames are alternately transmitted. Thus, the transmission data specifying unit 204-3 can specify that a 1230-th I frame, a 1232-th I frame, a 1234-th I frame, a 1236-th I frame, and the like are transmitted. Further, the transmission data specifying unit 204-3 can specify the byte position (the head position and the length from the head position) of each specified I frame in the content based on the analysis result obtained by the content metadata analyzing unit 210-3.

Since the process of steps S306 to S313 is the same as the process of steps S205 to S212 of FIG. 6 illustrating the data transfer process according to the second embodiment, and thus a description thereof will not be repeated.

An operation of the communication processing unit 140-3 is basically the same as in the second embodiment, but in the trick play, since the I frames have to be transmitted at intervals of 0.5 sec, the transmission is different. The details will be described below.

The I frame corresponding to transmission data is configured with a plurality of transmission packets. As described above, for example, the transmission packet is configured with seven MPEG TS packets or TTS packets (unit packets). An example using the TTS packet will be mainly described below, but the present invention can be similarly applied even when the TS packet is used.

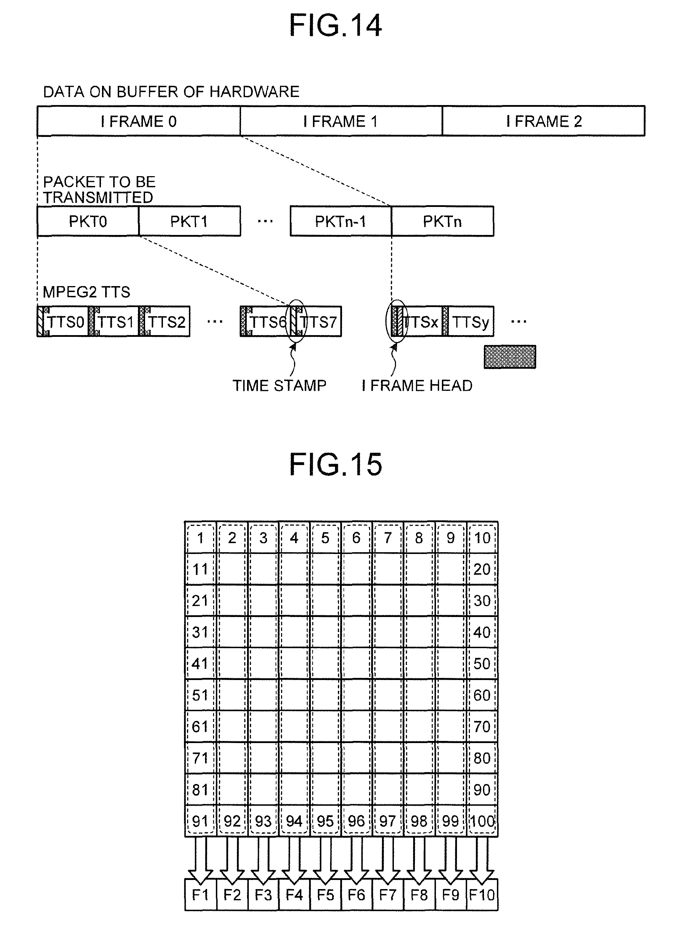

FIG. 14 is a diagram illustrating an example of a relation between an I frame and a packet. In FIG. 14, an upper tier illustrates a form in which an I frame is developed on the data buffer 170-2. In the previous example, an I frame 0 is a 1230-th I frame, an I frame 1 is a 1232-th I frame, and an I frame 2 is a 1234-th I frame. A middle tier illustrates an exemplary configuration of a transmission packet. For example, the I frame 0 is divided into n transmission packets PKT0 to PKTn-1 and transmitted. A lower tier illustrates an exemplary configuration of an MPEG TTS packet. For example, PKT0 is configured with TTS0 to TTS6.

As described above in the second embodiment, each TTS stores a time stamp value in first 4 bytes thereof. In the case where a transmission packet in the same I frame is transmitted, the data read unit 145 reads the time stamp value, similarly to the second embodiment. Then, the transmission time generating unit 147 operates to obtain a transmission time of a next packet.

As described above, a next I frame is specified at a time such as after 0.25 sec, for example. Thus, in the case where a next packet is the head of an I frame, the transmission time generating unit 147 sets a transmission time of a next packet to a time after 0.25 sec from a time at which a transmission packet (PKT0 in the example of FIG. 14) serving as the head of a previous I frame is transmitted, regardless of the read time stamp value.

In order to implement this operation, the head determining unit 148-3 is used to determine whether a packet to be transmitted next is the head of an I frame. Specifically, first, the data read unit 145 is configured to read the header (TS header) of the TS packet subsequently to the time stamp value. For example, the head determining unit 148-3 checks whether payload_unit_start_indicator representing the head of a PES of the read TS header is set to "1." When content includes a TS packet in addition to video, the head determining unit 148-3, it may be additionally checked whether a PID represents VIDEO.

FIG. 14 illustrates an example in which the head of an I frame is represented by TTSx. Through the I frame head determination above-described, a function of transmitting transmission packets at short intervals which is the same as in the normal reproduction in the same I frame while transmitting a next I frame with a predetermined long time interval such as 0.25 sec can be implemented. Thus, for example, intermittent I frame transmission necessary for transmission for IPTV trick play can be implemented. Further, an I frame interval depends on a system specification, content, or the like. Thus, the above-described I frame interval, that is, a period of time such as 0.5 sec is an example, and the present invention is not limited to this example.

As described above, in the present embodiment, the host CPU 200-3 extracts only an I frame necessary for reproduction from the MPEG data illustrated in FIG. 10, and transfers the data illustrated in FIG. 14 to the data transferring apparatus 100. Thus, the data transferring apparatus 100 may perform only a process of detecting the head of an I frame and transmitting a packet in order to implement the trick play. In other words, even when the trick play is performed, the data transferring apparatus 100 may perform only a very simple process, and in this case, there is an advantage of simplifying the configuration of the data transferring apparatus 100.

Next, an example in which transmission of an FEC packet is performed will be described. The FEC refers to a technique in which a redundant data packet is added to data packets to be transmitted, and when a data packet is lost in an intermediate path of a network, the lost data packet is restored using the remaining data packets which are not lost and the redundant data packet. Specifically, in the case where data packets A, B, and C are transmitted, for example, a data packet X obtained by XORing a payload of data in units of bits as in X = A xor B xor C is transmitted together. As a result of transmission, when the data packet B is lost, a reception side can restore the data packet B as in B = A xor C xor X from the remaining data packets A, C, and X. However, for example, when two data packets such as the data packet B and the data packet A are lost, it is difficult to restore.

In the case of the IPTV, a technique of compensating the loss of data (video and audio data) using the FEC is specified in the Pro-MPEG specification. In the Pro-MPEG, an RTP packet is transmitted as a data packet. For example, the data packets A, B, and C correspond to RTP packets. A packet length is specified as being constant, and the XOR operation is performed between bits of the same offset of each data packet. Further, since actual data is transmitted as a stream, data packets are sequentially transmitted. In the Pro-MPEG, a predetermined number of data packets are grouped, and groups of data packets sequentially generate an FEC packet.

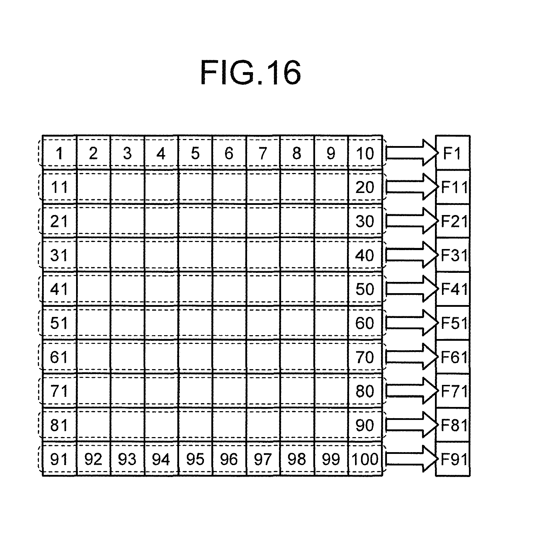

FIGS. 15 and 16 are diagrams illustrating an example of grouping data packets to generate an FEC packet. FIGS. 15 and 16 illustrate a form in which data packets to be transmitted are arranged in the form of a 10×10 matrix and displayed. FIGS. 15 and 16 illustrate a form in which grouping of data packets are performed in the vertical direction and the horizontal direction to generate FEC packets. The FEC of FIG. 15 is referred to as a column FEC, and the FEC of FIG. 16 is referred to as a row FEC. As described above, when only one of the grouped data packets is lost, the reception side can restore the lost data packet.

Since the column FEC is one in which grouping is performed in the vertical direction, the column FEC has a feature of being robust to loss continued in the horizontal direction, that is, a burst loss. The row FEC is to compensate the column FEC and functions to increase resistance to random loss.

In the present embodiment, the FEC packet is generated as follows. For example, in FIG. 16, in the case of a first row FEC, data packets 1 to 10 are transmitted, and then a first row FEC F1 is transmitted. The transmission determining unit 143 detects the current position of the data packet in the matrix after transmission of the data packet, and determines whether the column FEC and the row FEC are to be transmitted. For example, when data packets are represented by 0 to 99 in a 10×10 matrix, a configuration in which it is determined that the row FEC is to be transmitted when the data packets are 9, 19, 29, ..., and 99 can be provided.

When it is determined that the row FEC is to be transmitted, the header generating unit 144 generates the header of the FEC packet. Further, the data read unit 145 reads data of all data packets 0 to 9 protected by the FEC. Then, the packet generating unit 146 generate the FEC packet using the generated header and the payload which is data obtained by XORing all read data, and outputs the FEC packet.

Meanwhile, the FEC packet is similarly transmitted even while the trick play, that is, transmission of the I frame is being performed. However, the following problem occurs in this state. First, since the data length of the I frame is arbitrary, for example, the data length of the I frame may not be a multiple of 1344 bytes (= 193 bytes (the size of the MPEG TTS packet)×7) which is the length of the transmission packet illustrated in the above example. More specifically, the number of TTSs configuring the I frame may not be necessarily a multiple of 7.

In addition, a specification in which a plurality of I frame are not allowed to be mixed in a single transmission packet is set in the trick play method for the IPTV.

As described above, in the present embodiment, the host CPU 200-3 specifies the position of an I frame, data of an I frame is temporarily stored in the data buffer 170-2 of the data transferring apparatus, and an I frame is divided into transmission packets and transmitted. Further, the data buffer 170-2 are filed with different I frames without a space. Thus, when a transmission packet serving as the end of a certain I frame is generated, if the number of TTS of the corresponding I frame is not a multiple of 7, the head portion of a next I frame next is included in the transmission packet serving as the end. In other words, a plurality of I frames are included in a single transmission packet, and it is a specification violation.

In order to prevent the specification violation, the following technique is simply considered. For example, there is a technique in which when a transmission packet serving as the end of an I frame is generated through the packet generating unit 146 or the like, a NULL TTS is inserted in a fractional part, and continuing data (that is, head data of a next I frame) is configured to be transmitted from a next transmission packet. The NULL TTS means a TTS packet including null data. However, in this technique, when an FEC packet is transmitted, there is still the following problem.

When an FEC packet is generated, the data read unit 145 reads protection target data. For example, in the example of the first row FEC described above, the data read unit 145 reads data of the data packets 0 to 9. Specifically, if an address of head data of the data packet 0 in the data buffer 170-2 is represented by BASE, an operation is performed such that 1344 bytes are read from each of addresses of BASE+1344×0, BASE+1344×1, BASE+1344×2, ..., and 1344×9.

Similarly, in the example of the first column FEC, the data read unit 145 reads data of the data packets 0, 10, 20, ..., and 90. In other words, the data read unit 145 reads 1344 bytes from each of addresses of BASE+1344×0, BASE+1344×10, BASE+1344×20, ..., and BASE+1344x90. However, this process is under the assumption that each data packet is necessarily allocated to data of a fixed length of 1344 bytes of the data buffer 170-2. When this assumption collapses when a NULL TTS is inserted in the end of an I frame, the position of a data packet is not required in such a simple calculation. For example, when two NULL TTSs are inserted in the end of an I frame including the data packet 5, the head subsequent to the data packet 6 is BASE+1344x6-192x2.

Thus, in this case, in order to properly perform a calculation, all positions at which a NULL TTS is inserted are stored, and an address calculation needs to be performed in view of the positions. Further, when the length of a transmission packet serving as the end of an I frame read at the time of generation of an FEC packet is not a multiple of "(size of TTS)×7," a NULL TTS needs to be added and transferred to the packet generating unit 146. However, there is a problem in that this configuration causes processing complicated.

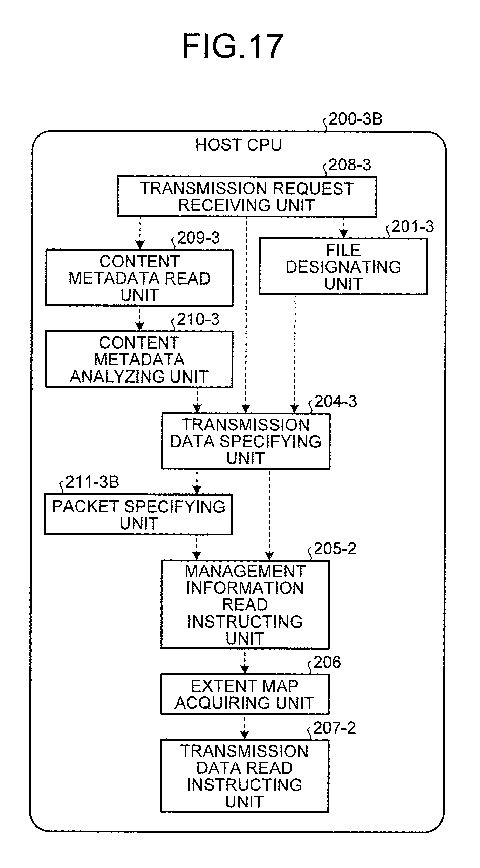

In this regard, it is preferable that the host CPU be configured as illustrated in FIG. 17. FIG. 17 is a block diagram illustrating an exemplary configuration of a host CPU 200-3B according to a modified example of the third embodiment having the above-described configuration.

In the present modified example, the host CPU 200-3B includes a packet specifying unit 211-3B. The packet specifying unit 211-3B specifies a NULL TTS embedded in the end so that the length of an I frame is a multiple of "the number of TTS configuring a data packet" based on the length of a specified I frame when the length of an I frame is not a multiple of (the number of TTS configuring a data packet). In the following, the length of an I frame is represented using a TTS as a unit. For example, the length of an I frame (an I frame length) including 100 TTSs is represented by 100 TTS. A unit of an I frame length is not limited to this example, and for example, an I frame length may be represented by using a byte as a unit.

For example, when the length of an I frame is 100 TTS, 100 is not divided by 7, but when 105 TTS is obtained by adding 5 TTS, 105 TTS is divided by 7, that is, 105/7 = 15. Thus, the packet specifying unit 211-3B specifies that five TTSs are transmitted.

For example, a NULL TTS file having a length corresponding to a number (six in this case) obtained by subtracting one from the number of TTSs configuring a data packet is prepared on the storage 300. The packet specifying unit 211-3B uses a head and a length of data to be read to the extent map acquiring unit 206 at the subsequent stage as a head of a NULL TTS file and a length "192x5 = 960 bytes in this example" corresponding to the number of necessary TTSs.

The extent map acquiring unit 206 processes the NULL TTS file after an I frame to be transmitted. Through this operation, in the data buffer 170-2, a NULL TTS is inserted in the end of an I frame which is not divided by 7TTS. In other words, data transferring apparatus can constantly deal an I frame as being divided by 7TTS. Thus, it is unnecessary to insert a NULL TTS, and a process of calculating a data read address when an FEC packet is generated can be also easily performed.

The inserting of a NULL TTS is not limited to the above-described technique. For example, the host CPU 200-3B may directly writes a NULL TTS in a data buffer, or a NULL TTS may be written such that a processing unit that generates a NULL TTS is separately disposed in the data transferring apparatus, and a NULL TTS may be written by the processing unit. The point of the present modified example lies in that when an I frame is not divided by the length of 7xTTS, the data extracting unit leaves a length of (a number specified by the packet specifying unit)xTTS, and writes data of a next I frame. Through this operation, an FEC calculation can be easily performed as described above. Further, a NULL TTS need not be necessarily written in the data buffer, and a NULL TTS may be written such that the data extracting unit leaves as large space as possible, the data read unit reads data, and data (including an indefinite value) at an empty position is replaced with a NULL TTS.

As described above, according to the first to third embodiments, the processing load of the host CPU can be reduced, and the data transfer can be efficiently performed. Further, efficient processing can be implemented in transmission for the trick play which is a main function of the content delivery server.

At least a part of the data transmitting system described in each of the above embodiments may be configured with hardware or software. When at least a part of the data transmitting system is configured with software, a program for implementing at least some of the functions of the data transmitting system may be stored in a recording medium such as a flexible disk or a CD-ROM, and read and executed by a computer. The recording medium is not limited to a removable medium such as a magnetic disk or an optical disk, and may be a fixed type recording medium such as a hard disk device or memory.

Further, a program for implementing at least some of the functions of the data transmitting system may be distributed through a communication lines (including a wireless communication) such as the Interment. In addition, the same program may be distributed through a wired line such as the Internet or a wireless line in an encrypted, modulated, or compressed state, or the same program may be distributed in the form that the program is stored in a recording medium.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

### Reference Signs List

100 DATA TRANSFERRING APPARATUS
110 COMMAND ISSUING UNIT
120 NOTIFICATION DISTRIBUTING UNIT
130 TRANSMISSION DATA EXTRACTING UNIT
140 COMMUNICATION PROCESSING UNIT
150-2 FLOW CONTROL UNIT
160-2 BUFFER MANAGING UNIT
170-2 DATA BUFFER
200 HOST CPU
201 FILE DESIGNATING UNIT
202 METADATA DESIGNATING UNIT
203 METADATA ANALYZING UNIT
204 TRANSMISSION DATA SPECIFYING UNIT
205 MANAGEMENT INFORMATION READ INSTRUCTING UNIT
206 EXTENT MAP ACQUIRING UNIT
207 TRANSMISSION DATA READ INSTRUCTING UNIT
300 STORAGE
400 NETWORK

## Claims

1. A data transferring apparatus that is connected to a control device and transmits data stored in a memory device in units of blocks to a network, comprising:
a command issuing unit configured to issue, to the memory device, a read command for reading a block for which a read instruction is given from the control device;
a transmission data extracting unit configured to extract transmission data from data read from the memory device according to the read command; and
a communication processing unit configured to transmit the extracted transmission data to the network based on a predetermined protocol.

2. A data transmitting system, comprising:
a control device; and
a data transferring apparatus that transmits data stored in a memory device in units of blocks to a network, wherein
the control device includes
a file designating unit configured to designate a file including transmission data representing data to be transmitted among pieces of data stored in the memory device,
a metadata designating unit configured to designate metadata including specifying information used to specify a position of the transmission data in the file,
a transmission data specifying unit configured to specify the position of the transmission data in the file based on the specifying information, and
a transmission data read instructing unit configured to instruct the data transferring apparatus to read a block including the transmission data at the specified position, and
the data transferring apparatus includes
a command issuing unit configured to issue, to the memory device, a read command for reading the block for which a read instruction is given,
a transmission data extracting unit configured to extract the transmission data from data read from the memory device according to the read command, and
a communication processing unit configured to transmit the extracted transmission data to the network based on a predetermined protocol.

3. The system according to claim 2, wherein
the file is MPEG stream data,
the data transmitting system further comprises a content metadata acquiring unit configured to acquire content metadata used to specify a position of an I frame of the MPEG stream data,
the specifying information includes at least one of a reproduction direction and a reproduction speed of a trick play, and
the transmission data specifying unit specifies the I frame to be transmitted and a byte position of the I frame in the file based on the specifying information and the content metadata.

4. The system according to claim 2, wherein
the control device further comprises a map acquiring unit configured to acquire map information representing correspondence between the specified transmission data and the block from the memory device,
the transmission data read instructing unit further transmits, to the data transferring apparatus, position information representing the position of the transmission data in the block based on the map information, and
the transmission data extracting unit extracts the transmission data from data read from the memory device according to the read command based on the position information.

5. The system according to claim 2, further comprising:
a buffer unit configured to stores therein the extracted transmission data; and
a flow control unit configured to instruct the command issuing unit to read a block having a size equal to or less than a size of a free space of the buffer unit among blocks for which a read instruction is given by the transmission data read instructing unit, wherein
the communication processing unit transmits, to the network, the transmission data stored in the buffer unit based on the protocol.

6. The system according to claim 5, wherein
the communication processing unit includes
a time generating unit configured to generate a transmission time of a transmission packet which is a transmission unit of the transmission data,
a data read unit configured to read a payload of the transmission packet from the buffer unit when the transmission time comes,
a header generating unit configured to generate a header to be added to the read payload, and
a packet generating unit configured to generate the transmission packet in which the header is added to the read payload, and transmit the transmission packet to the network.

7. The system according to claim 6, wherein
the time generating unit generates the transmission time based on a bit rate of the transmission data.

8. The system according to claim 6, wherein
a unit packet which is a constitutional unit of the transmission packet includes a time stamp,
the data read unit reads the time stamp included in the unit packet of a head of the payload to be transmitted next to the read payload, and
the time generating unit generates the transmission time based on the read time stamp.

9. The system according to claim 8, wherein
the unit packet includes the time stamp in the head,
the buffer unit consecutively stores the unit packets in an order in which the unit packets are transmitted, and
the data read unit collectively reads the transmission packet whose transmission time comes and the time stamp included in the unit packet of the head of the transmission packet to be transmitted next to the transmission packet whose transmission time comes.

10. The system according to claim 6, wherein
the transmission data is an I frame of MPEG stream data,
the transmission packet includes a plurality of unit packets which are MPEG Transport Stream (TS) packets or Timestamped Transport Stream (TTS) packets,
the unit packet includes determination information for determining whether the unit packet is a unit packet of the head of the I frame,
the data read unit reads, from the buffer unit, the determination information included in the unit packet of the head of the transmission packet to be transmitted next to the read transmission packet,
the data transmitting system further comprises a head determining unit configured to determine whether the unit packet of the head of the transmission packet to be transmitted next is a unit packet of the head of the I frame based on the determination information, and
the time generating unit generates the transmission time according to transmission intervals of I frames when the unit packet of the head of the transmission packet to be transmitted next is a unit packet of the head of the I frame.

11. The system according to claim 10, wherein
the transmission packet includes a prescribed number of unit packets,
the control device further comprises a packet specifying unit configured to specify the number of unit packets which are added to an I frame to be transmitted so that the number of unit packets included in the I frame to be transmitted is a multiple of the prescribed number when the number of unit packets included in the I frame to be transmitted is not a multiple of the prescribed number, and
the transmission data read instructing unit instructs the data transferring apparatus to read a block including the specified transmission data and to read the specified number of unit packets.

12. The system according to claim 10, wherein
the transmission packet includes a prescribed number of unit packets,
the control device further includes a packet specifying unit configured to specify the number of unit packets which are added to an I frame to be transmitted so that the number of unit packets included in the I frame to be transmitted is a multiple of the prescribed number when the number of unit packets included in the I frame to be transmitted is not a multiple of the prescribed number, and
the buffer unit stores the extracted transmission data at an offset position in the specified number of unit packets.

13. The system according to claim 2, wherein
the data transferring apparatus is configured as a Peripheral Component Interconnect (PCI)-Express card.

14. A data transmitting method performed by a data transmitting system including a control device and a data transferring apparatus that transmits data stored in a memory device in units of blocks to a network, the method comprising:
a file designating step of designating a file including transmission data representing data to be transmitted among pieces of data stored in the memory device by the control device;
a metadata designating step of designating metadata including specifying information used to specify a position of the transmission data in the file by the control device;
a transmission data specifying step of specifying the position of the transmission data in the file based on the specifying information by the control device;
a transmission data read instructing step of instructing the data transferring apparatus to read a block including the transmission data at the specified position by the control device;
a command issuing step of issuing, to the memory device, a read command for reading a block for which a read instruction is given, by the data transferring apparatus;
a transmission data extracting step of extracting the transmission data from data read from the memory device according to the read command by the data transferring apparatus; and
a communication processing step of transmitting the extracted transmission data to the network based on a predetermined protocol by the data transferring apparatus.

15. A data transfer program causing a computer to function as:
a file designating unit configured to designate a file including transmission data representing data to be transmitted among pieces of data stored in a memory device;
a metadata designating unit configured to designate metadata including specifying information used to specify a position of the transmission data in the file;
a transmission data specifying unit configured to specify the position of the transmission data in the file based on the specifying information;
a transmission data read instructing unit configured to gives an instruction for reading a block including the transmission data at the specified position;
a command issuing unit configured to issue, to the memory device, a read command for reading the block for which a read instruction is given;
a transmission data extracting unit configured to extract the transmission data from data read from the memory device according to the read command, and
a communication processing unit configured to transmit the extracted transmission data to the network based on a predetermined protocol.
